Europäisches Patentamt

European Patent Office

Office européen des brevets

(11) Publication number: **0 361 745**
**A1**

## EUROPEAN PATENT APPLICATION

(21) Application number: 89309405.2

(22) Date of filing: 15.09.89

(51) Int. Cl.⁵: **F16D 3/30**

(30) Priority: 29.09.88 GB 8822843

(43) Date of publication of application:
04.04.90 Bulletin 90/14

(84) Designated Contracting States:
DE ES FR GB IT SE

(71) Applicant: **JAGUAR CARS LIMITED**
**Browns Lane**
**Allesley Coventry CV5 9DR West**
**Midlands(GB)**

(72) Inventor: **Parsons, Bryan Nigel Victor**
**2 Church Street**
**Stoney Stanton Leicestershire(GB)**

(74) Representative: **Watts, Peter Graham et al**
**Anthony Cundy & Co. 384 Station Road**
**Dorridge**
**Solihull West Midlands B93 8ES(GB)**

(54) **Universal joints.**

(57) A constant velocity universal joint has first and second yokes (12, 14) each yoke being adapted to be connected to a shaft (11, 13), a spider (16) is pivotally connected across the first yoke (12) and diametrically across an intermediate ring (15), the second yoke (14) is pivotally connected to the intermediate ring (15) on a diameter perpendicular to the pivotal connection between the intermediate ring (15) and the spider (16). Formations (42, 43) are associated with each of the yokes (12, 14) and engage complementary formations (35, 36) disposed in a common plane perpendicular to the axis of the pivotal connections between the spider (16) and the intermediate ring (15). The complementary formations (35, 36) are slidably mounted with respect to the spider (16) for movement together axially of the pivotal connections between the spider (16) and the intermediate ring (15), the formations (42, 43) associated with the yokes (12, 14) and complementary formations (35, 36) being arranged such that the plane of rotation of the axis of the pivotal connections of the spider (16) with the intermediate ring (15) will bisect the angle subtended between the axis of rotation of the yokes (12, 14), when the yokes (12, 14) rotate.

FIG 1

## UNIVERSAL JOINTS

The present invention relates to universal joints and in particular to constant velocity universal joints.

With conventional universal joints which are used to transmit motion between two angularly misaligned rotating shafts, for example on a motor vehicle, a sinusoidal component is introduced into the velocity of the output shaft.

This problem may be overcome by the introduction of an intermediate shaft with universal joints at each end, the input and output shafts being maintained at equal inclinations to the intermediate shaft. However, difficulties arise in maintaining the input and output shafts at equal inclination and the additional shaft significantly increases the size and weight of the transmission system. These problems may be reduced to some extent by reducing the length of the intermediate shaft and providing interengaging formations on the input and output shafts. Nevertheless, the double universal joint resulting is significantly longer and heavier than the conventional universal joint.

According to one aspect of the present invention, a constant velocity universal joint comprises first and second yokes each yoke being adapted to be connected to a shaft, a spider pivotally connected across the first yoke, the spider being pivotally connected diametrically across an intermediate ring, a pair of trunnions, one on each lug of the second yoke, said trunnions being pivotally connected to the intermediate ring on a diameter perpendicular to the pivotal connections between the ring and the spider, characterised in that formations are associated with each of the yokes, said formations engaging complementary formations disposed in a common plane perpendicular to the axis of the pivotal connections between the spider and the intermediate ring, said complementary formations being slidably mounted with respect to the spider for movement together axially of the pivotal connections between the spider and the intermediate ring, the formations associated with the yokes and complementary formations being arranged such that the plane of rotation of the axis of the pivotal connections of the spider with the intermediate ring will bisect the angle subtended between the axes of rotation of the yokes, when the yokes rotate.

The constant velocity universal joint described above is of similar length to the conventional universal joint and significantly lighter than the double universal joint arrangement proposed hitherto. Furthermore, the constant velocity universal joint according to the present invention includes only six pivotal connections as opposed to eight pivotal connections on the double universal joint.

Embodiments of the invention are now described, by way of example only, with reference to the accompanying drawings; in which:-

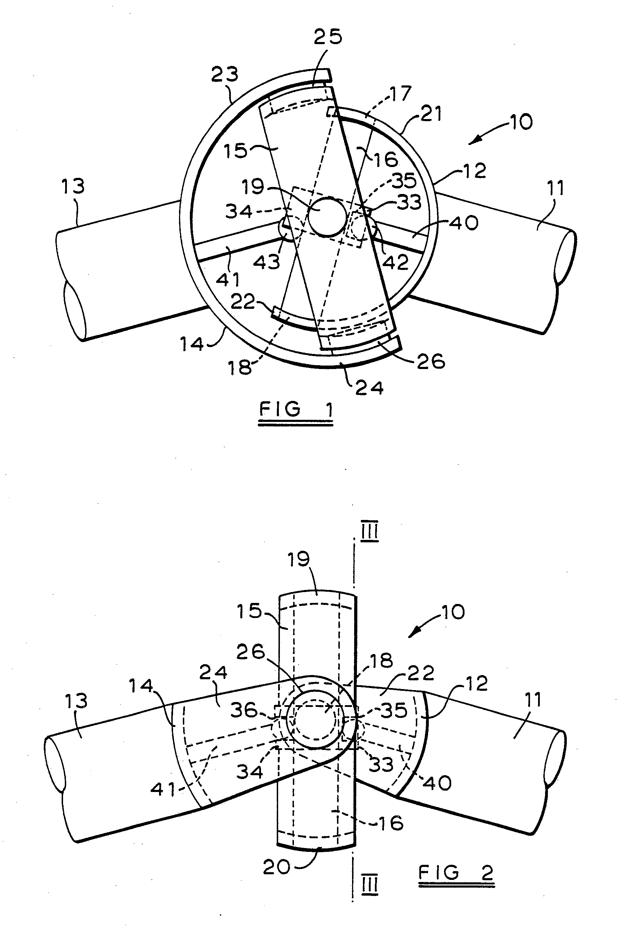

Figure 1 is a side elevation of a constant velocity universal joint formed in accordance with the present invention;

Figure 2 is a view similar to that of Figure 1 but with the shafts rotated through 90°;

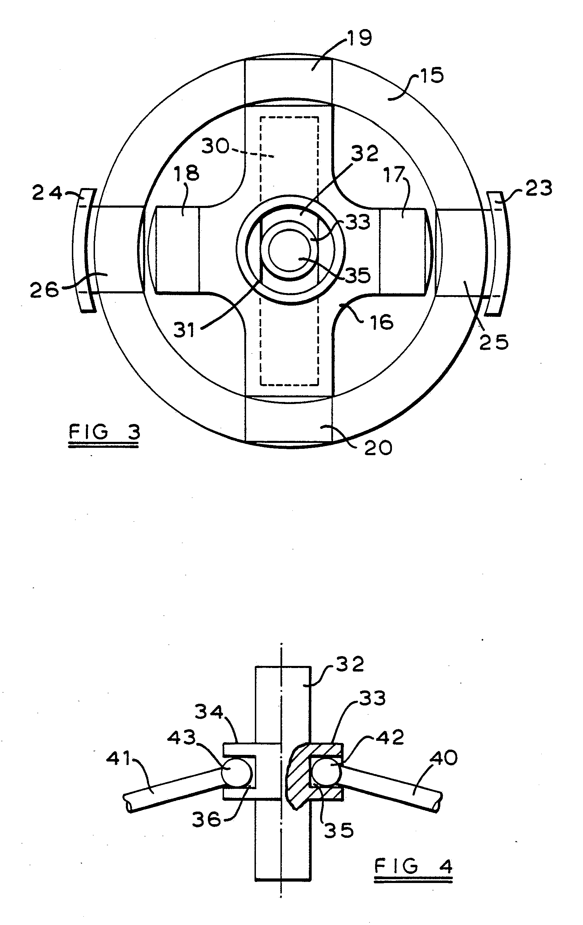

Figure 3 is a section along the line III-III of Figure 2;

Figure 4 illustrates the mechanism for maintaining equal inclination between the plane of rotation of the connections between the spider and ring, and each of the shafts;

Figure 5 is a plan view of the mechanism illustrated in Figure 4;

Figure 6 illustrates an alternative mechanism for maintaining equal inclination between the plane of rotation of the connections between the spider and ring, and each of the shafts;

Figure 7 illustrates in side elevation further alternative mechanism for maintaining equal inclination between the plane of rotation of the connections between the spider and ring, and each of the shafts; and

Figure 8 is a plan view of the mechanism illustrated in Figure 7.

As illustrated in the accompanying drawings, a constant velocity universal joint 10 comprises a first shaft 11 with a yoke 12 at one end and a second shaft 13 with yoke 14 at one end. Shaft 11 is coupled to an intermediate ring 15 by means of a spider 16. The spider is of generally conventional configuration having two pairs of trunnions 17, 18 and 19, 20, each pair being coaxial and disposed perpendicular to the other pair. One pair of trunnions 17, 18 are however disposed radially inwardly of the other pair of trunnions 19, 20.

The trunnions 17 and 18 are pivotally connected to the opposed lugs 21 and 22 of yoke 12 while trunnions 19 and 20 are pivotally connected diametrically to the ring 15. The trunnions 17, 18, 19 and 20 are pivotally connected to the yoke 12 and ring 15 by suitable bearing means, in known manner.

The ring 15 is of greater internal diameter than the span of the yoke 12 so that yoke 12 and the shaft 11 are free to rotate about the axis defined by trunnions 17 and 18.

The lugs 23 and 24 of yoke 14 are each provided with a radially inwardly directed trunnion 25 and 26. The trunnions 25 and 26 are pivotally connected in suitable bearing means, to the ring 15, diametrically on an axis perpendicular to the axis of the trunnions 19 and 20 and in the same plane.

A bore 30, coaxial with trunnions 19 and 20, is provided in the spider 16 and transverse bore 31 centrally of the spider 16 provides access to the bore 30 from both sides of the spider 16. The bore 31 is of greater diameter than the bore 30 so as to provide elongate apertures to bore 30.

A slider 32, illustrated in greater detail in Figures 4 and 5, is slidingly located in the bore 30. The slider 32 is of cylindrical configuration with a pair of diametrically opposed radially outwardly extending formations 33 and 34 formed centrally thereof. Formation 33 is formed with a socket 35 while formation 34 is provided with a groove 36, the axis of the groove 36 being transverse to the axis of the slider 32. The formations 33 and 34 extend through the elongate apertures to bore 30 provided by bore 31, so that the slider 32 is capable of limited axial movement in the bore 30.

Rods 40 and 41 extend axially from yokes 12, 14 on opposed ends of the shafts 11 and 13 respectively. Each of the rods 40 and 41 are terminated in a ball formation 42 and 43 respectively. The ball formations 42 and 43 engage the slider 32, one ball formation 42 locating in the socket 35 and the other ball formation 43 engaging in the groove 36.

Engagement of the ball formations 42 and 43 with the socket 35 and groove 36 of slider 32, will ensure that during rotation of shafts 11 and 13, equal inclination is maintained between the plane of rotation of the axis of trunnions 19 and 20 and each of the shafts 11 and 13.

With the constant velocity universal joint described above, a constant velocity rotation applied to shaft 11 will be transmitted via spider 16 to ring 15. Because of inclination between the axis of the shaft 11 and the plane of rotation of the axis of trunnions 19 and 20, rotation of the ring 15 will have a sinusoidal component. This sinusoidal component is however removed as the ring 15 drives the shaft 13 via trunnions 25 and 26 and the shaft 13 will be rotated at constant velocity.

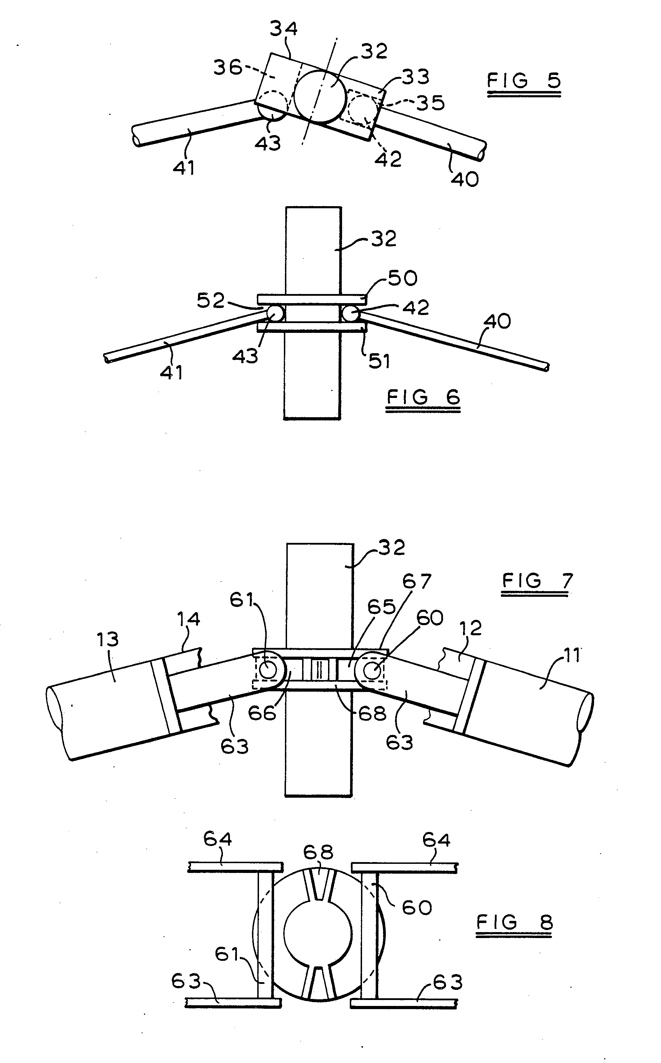

In the modification illustrated in Figure 6, the formations 33 and 34 on slider 32 are replaced by a pair of flange formations 50 and 51 which define a circumferential groove 52. With this modified slider 32, a square aperture must be provided transversely through the spider 16 to permit limited axial movement of the slider 32. The ball formations 42 and 43 on lugs 40 and 41 then engage in the circumferential groove 52 to maintain equal inclination between the plane of rotation of the axis of trunnions 19 and 20 and each of the shafts 11 and 13.

In the modification illustrated in Figures 7 and 8, the ball formations 42 and 43 are replaced by pins 60 and 61. The pins 60 and 61 are mounted between a pair of projections 63 and 64 extending from the yokes 12, 14 on opposed ends of the shafts 11 and 13, the pins 60 and 61 being located parallel to the pivotal connections of shaft 11 to spider 16 and shaft 13 to the intermediate ring 15 respectively. Alternatively pin 60 may be mounted between the lugs 21 and 22 of yoke 12. The pins 60 and 61 engage in part circumferential grooves 65 and 66 defined between a pair of flange formations 67 and 68 on the slider 32.

Engagement of the pins 60 and 61 in grooves 65 and 66 will maintain equal inclination between the plane of rotation and the axis of trunnions 19 and 20 and each of the shafts 11 and 13, in similar manner to the ball formations 42 and 43 of the embodiment illustrated in Figures 4 and 5. In addition, torque will be transmitted by engagement of pins 60 and 61 with grooves 65 and 66 thereby increasing the load carrying capacity of the joint.

Various modifications may be made without departing from the invention. For example while the span of yoke 12 must be less than the internal diameter of ring 15 and the span of yoke 14 in order to permit free pivotting of the shafts 11 and 13, the yoke 14 may be positioned either externally (as illustrated) or internally of ring 15. For improved smoothness, the ball formations 42 and 43 may engage in complementary part-spherical socket formations in sliders which are slidingly located in the grooves 36, 52 and/or socket 35.

## Claims

1. A constant velocity universal joint comprising first and second yokes (12, 14) each yoke (12, 14) being adapted to be connected to a shaft (11, 13), a spider (16) pivotally connected across the first yoke (12), the spider (16) being pivotally connected diametrically across an intermediate ring (15), a pair of trunnions (25, 26), one on each lug (23, 24) of the second yoke (14), said trunnions (25, 26) being pivotally connected to the intermediate ring (15) on a diameter perpendicular to the pivotal connections between the ring (15) and the spider (16), characterised in that formations (42, 43; 60, 61) are associated with each of the yokes (12, 14), said formations (42, 43; 60, 61) engaging complementary formations (33, 34; 52; 65, 66) disposed in a common plane perpendicular to the axis of the pivotal connections between the spider (16) and the intermediate ring (15), said complementary formations (33, 34; 52; 65,66) being slidably mounted with respect to the spider (16) for movement together axially of the pivotal connections between the spider (16) and the intermediate ring (15), the formations (42, 43; 60, 61) associated with the yokes (12, 14) and complimentary formations (33,34; 52; 65,66) being arranged such that the plane of rotation of the axis of the pivotal connections of the spider (16) with the intermediate ring (15) will bisect the angle subtended between the axes of rotation of the yokes (12,14), when the yokes (12, 14) rotate.

2. A constant velocity universal joint according to Claim 1 characterised in that the axis of the pivotal connections with the intermediate ring (15) are co-planar.

3. A constant velocity universal joint according to Claim 1 or 2 characterised in that the pivotal connections between the spider (16)and first yoke (12) are spaced inwardly of the pivotal connections between the spider (16) and intermediate ring (15), and the intermediate ring (15) and the second yoke (14).

4. A constant velocity universal joint according to any one of Claims 1 to 3 characterised in that a slider (32) is slidingly located in a bore (30) in the spider (16), said bore (30) being coaxial with the pivotal connections between the spider (16) and intermediate ring (15), apertures (31) being provided to the bore (30) centrally of the spider (16) and formations (33, 34; 52; 65,66) on the slider (32) extended through said apertures (31) to engage the corresponding formations (42, 43; 60,61) on the yokes (12,14).

5. A constant velocity universal joint according to Claim 4 characterised in that a pair of diametrically opposed formations (33, 34) are provided on the slider (32), one formation (33) defining a socket (35) and the other formation (34) defining a transverse groove (36), ball formations (42, 43) on the yokes (12, 14) engaging in the socket (35) and groove (36).

6. A constant velocity universal joint according to Claim 4 characterised in that a pair of flanges (50, 51) on the slider (32) define a circumferential groove (52) in which ball formations (42, 43) engage.

7. A constant velocity universal joint according to any one of Claims 4 to 7 characterised in that rods (40, 41) extend axially from the yokes (12, 14) and engage in the corresponding formations (33, 34; 52) associated with the slider (32).

8. A constant velocity universal joint according to Claim 4 characterised in that a pin (60, 61), disposed parallel to the pivotal connection to each yoke (12, 14), is associated with each yoke (12, 14), each pin (60, 61) engaging a circumferential or part circumferential groove (65, 66) provided on the slider (32).

FIG 1

FIG 2

FIG 3

FIG 4

FIG 5

FIG 6

FIG 7

FIG 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 013 765 (KLEIN)<br>* Whole document *<br>--- | 1-4 | F 16 D 3/30 |
| X | US-A-3 461 688 (GARFINKLE)<br>* Whole document * | 1-3 | |
| Y | | 4,8 | |
| | --- | | |
| Y | US-A-1 965 853 (MORRISON)<br>* Whole document *<br>--- | 4,8 | |
| X | US-A-2 087 817 (SAUSSARD)<br>* Whole document * | 1-3 | |
| Y | | 4 | |
| | --- | | |
| Y | US-A-3 456 458 (DIXON)<br>* Column 3, figure 2 *<br>--- | 4 | |
| X | FR-A- 393 886 (GARNIER)<br>* Whole document * | 1-3 | |
| Y | | 4 | |
| | --- | | TECHNICAL FIELDS SEARCHED (Int. Cl.5) |
| Y | FR-A- 706 797 (FENAILLE)<br>* Whole document *<br>--- | 4 | F 16 D 3/00 |
| X | GB-A- 991 346 (B.R.D.)<br>* Whole document *<br>--- | 1-3 | |
| Y | FR-E- 92 728 (BASTID)<br>* Pages 1-4; figures 1-7 *<br>--- | 1-8 | |
| Y | DE-C- 694 747 (FRAMO-WERKE)<br>* Page 2, figures 1-4 *<br>----- | 1-8 | |

The present search report has been drawn up for all claims

| Place of search | Date of completion of the search | Examiner |
|---|---|---|
| THE HAGUE | 29-11-1989 | BALDWIN D.R. |

EPO FORM 1503 03.82 (P0401)